Europäisches Patentamt

European Patent Office

Office européen des brevets

(19)

(11) Publication number: **0 371 451**
**A2**

(12) **EUROPEAN PATENT APPLICATION**

(21) Application number: **89121918.0**

(22) Date of filing: **28.11.89**

(51) Int. Cl.⁵: **G07C 9/00, G07F 7/00**

(30) Priority: **28.11.88 US 276694**
**17.11.89**

(43) Date of publication of application:
**06.06.90 Bulletin 90/23**

(84) Designated Contracting States:
**AT BE CH DE ES FR GB GR IT LI LU NL SE**

(71) Applicant: **SECURE-TIME, INC.**
**2020 Avon Circle**
**Hayden Lake Idaho 83835(US)**

(72) Inventor: **Ratliff, James E.**
**HC12 Box 461**
**Coeur D'Alnee Idaho 83814(US)**
Inventor: **Nicholson, Walter P.**
**1543 Hayden View Drive**
**Coeur D'Alnee Idaho 83814(US)**

(74) Representative: **Patentanwälte Grünecker,**
**Kinkeldey, Stockmair & Partner**
**Maximilianstrasse 58**
**D-8000 München 22(DE)**

(54) **Electronic controller switch.**

(57) An electronic controller switch is disclosed for authorizing use of controlled devices. The electronic controller switch includes memory for storing a plurality of data strings unique to the particular controlled device with which the electronic controller switch is used. Each data string includes an access code, a validation data bit, and a user time data value. A user provides an input code to the controller via a standard infrared transmitter and an infrared receiver coupled to the controller. In response to the input code provided by the user, a microprocessor searches the memory to determine whether any of the data strings includes a corresponding access code. If a corresponding access code is found and the validation data bit of its data string is not set, then the user has provided a valid input code and will be authorized to use the controlled device. If the validation data bit is set, which indicates that the input code provided by the user has been previously used, the user will not be authorized. When the microprocessor determines that a user is authorized, the microprocessor will provide the use time data value of the data string to a timer, thereby to control the time period for which the user is authorized. Different data strings are provided with time data values corresponding to different duration time periods.

Figure 1

## ELECTRONIC CONTROLLER SWITCH

### Related Applications

This is a continuation-in-part of United States Patent Application Serial No. 07/276,694, filed November 28, 1988 in the name of James V. Ratliff and Walter P. Nicholson.

### Technical Field

The present invention is directed in general toward electronic switches and, more particularly, toward an electronic controller switch for authorizing and timing use of appliances, machines and other devices.

### Background of the Invention

Electronic entertainment devices such as television and video cassette records (VCRs) and other machinery such as cranes, bulldozers, trucks and backhoes are commonly rented by users for a predetermined period of time. After elapse of the rental period, the user must return to the rental owner's place of business to either purchase more time or return the rented unit. Should the user not return, the rental owner must take steps to ensure that either the rented unit is returned or the user reimburses the owner for unauthorized use periods.

In an effort to eliminate some of the inconvenience attendant this procedure, rental owners have developed various apparatus to allow authorized use of the rented unit for a predetermined time period. Such timer apparatus include timed switches and the like which are set to the predetermined time period by the rental owner when the user purchases time. Although these timer apparatus are effective for disabling power to the rented unit after elapse of the rental period, thereby ensuring no unauthorized use after the rental period expires, these timer apparatus still require the user to return the rented unit to the rental owner's place of business such that a new rental period may be set by the rental owner, i.e., so that more time can be purchased by the user. Returning the rented unit is inconvenient, and if the rented unit is a large machine, such as a crane, returning the rented unit such that the timer apparatus may be reset is impractical.

In addition to the foregoing inadequacies, known prior art timer apparatus have generally provided switches which allow the purchase of rented time in only a single fixed time period, e.g., one month. These devices do not provide means for allowing a user to purchase variable rental time periods for the same rental unit, such as, for example, one month on one occasion and then two months on a second occasion, without costly or time-consuming replacement or other alteration of the timer apparatus. Some timer apparatus do not provide any means for measuring the time of use, but instead provide an apparatus which simply measures a continuous time period, irrespective of use. In some applications, however, it may be desirable to provide an apparatus which allows a user to purchase a specified period of use time, e.g., 10 hours. This is particularly useful with large machinery, such as cranes or bulldozers, which are typically rented based upon the number of hours they are to be operated, not the total elapsed time the user has the machine in his possession.

Another disadvantage of the majority of prior art timer apparatus is that it is impossible for a user to purchase additional rental time before the lapse of an initial rental period. As such, delays may be encountered during which the rented unit is disabled after the rental period has expired and before the new one was started, or the user does not get the full benefit of the time for which the unit was rented since commencement of the new rental period cuts short the old rental time period.

One such prior art timer apparatus provides card keys and card key readers. The card key performs the function of a key in that it is used to set additional time on the rented unit. The card key has a magnetic strip attached, or some other means, whereupon a period of use can be specified. The rental owner will insert the card key in the card key reader, the card key reader being electronically coupled to the entertainment device, so that the electronic storage means of the card key can be read to provide the rental period to the switch and the rental period started. Such a system is illustrated and described in U.S. Patent No. 4,624,578, issued to Green on November 25, 1986.

Although this device does not require the rented unit to be returned to the rental owner's place of business, it does require the rental owner to visit the user's premises to reinsert the card key so that more time can be purchased. While the card could be mailed to the rented user, the cost, time delays, and security make this undesirable. Also, while this device allows the user to purchase more or less time, e.g., one month or two months, each rental period requires a different card key, thereby requiring the rental owner to have several card keys. Still further, since security reasons dictate that a different card key must be provided for each rented unit, a rental owner must have may card keys. The cost of the card keys and the card key reader is large enough that the apparatus is too expensive to be practical. Further, the timer apparatus makes no provision for purchasing a rental period according to use time rather than possession time.

Another disadvantage of prior art time apparatus is that should the master key or card fall into the hands of the users of the rented units, all security is lost and the units must be re-keyed. While a separate key could be used for each unit, this increases the cost and decreases the operating efficiency of the rental owner.

Accordingly, it is desirable to provide an electronic controller switch for allowing remote authorization of an electronic device whereby the user may purchase more rental time without returning the rented unit to the rental owner's place of business and without even visiting the rental owner and whereby the rental owner will be assured that the users cannot use the rented units without authorization. It is also desirable to provide such a switch which allows for purchase of variable use periods. It is further desirable to provide such a switch which allows additional use periods to be purchased before expiration of an initial use period to ensure continuous use of the device. It is still further desirable to provide such a switch which allows purchase of use time as opposed to purchase of possession time in situations where such is desired. Also, the switch should not utilize keys, key cards or other tangible devices which could allow users of other rented units to operate their units even should they have full knowledge of and access to the rented unit and any other tangible devices or information the user is provided to continue use of the rented unit for another rental time period. It is also desirable to totally eliminate the need for any key, key card or other tangible device the rental owner must carry to set additional time on the rented unit in case the device is lost or stolen.

## Summary of the Invention

The present invention comprises an apparatus for selectively allowing operation of a rented device in response to an input signal provided by a wireless remote controller of a user. The apparatus includes a switch which is responsive to an enable signal for enabling power to be supplied to the device from the power source. The apparatus also includes a user interface for interfacing the user with the timed controller. The user interface includes an infrared receiver for receiving an input signal from a wireless remote controller and for converting the input signal to an access signal. The apparatus further includes a data processor for providing the enable signal to the switch. The data processor is responsive to the access signal from the user interface to determine whether the user is authorized and, if so, to provide the enable signal.

In one presently preferred embodiment of the invention, the apparatus further includes memory for storing a plurality of data strings wherein each data string includes an access code. The data processor is responsive to the access signal and the plurality of access codes stored in the memory to determine whether the user is authorized and, if so, to provide the enable signal.

In an alternative form of the invention, the apparatus further comprises a timer which is responsive to the time signal for measuring time intervals. The data strings which are stored in the memory include, in addition to the access code, a use time data value. The data processor is adapted to provide the time signal to the timer in response to the use time data value of an authorizing data string. The data processor is further adapted to terminate the enable signal after elapse of the measured time interval.

These and other embodiments which are considered to be the invention are particularly pointed out and distinctly claimed in the numbered paragraphs appended hereto. The invention, however, both as to organization and method of practice, may best be understood from a reading of the following detailed description thereof taken in conjunction with the drawings.

## Brief Description of the Drawings

Figure 1 is an illustrative block diagram of the electronic controller switch which is the subject of the present invention.

Figures 2 through 5 are decision flow diagrams illustrating the method of operation of the electronic controller switch illustrated in Figure 1.

## Detailed Description of the Drawings

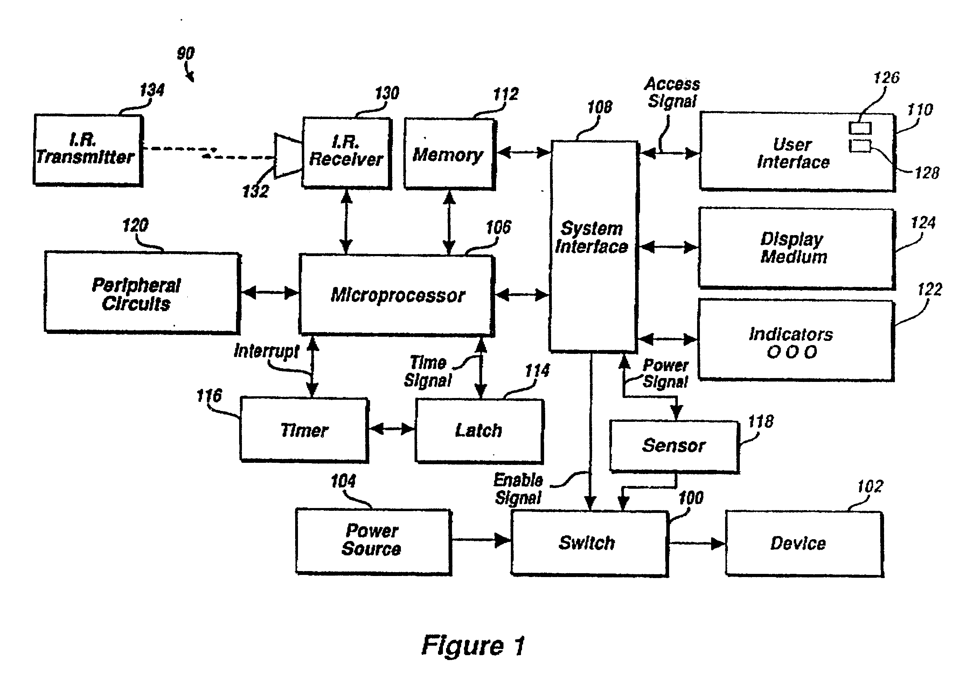

An electronic controller switch 90 which is the subject of the present invention is shown in the illustrative block diagram of Figure 1. Therein, an electronic switch 100 is responsive to an enable signal for providing power to a rented device 102 from a power source 104. For purposes of illustration, the device 102 is described as an electronic entertainment device, such as a radio, television, or video cassette recorder, which may be rented from rental stores (referred to herein as "rental owners"). It will be apparent, however, to those skilled in the art, that the device 102 may comprise any device typically rented for temporary use periods such as cranes, bulldozers, trucks and backhoes and other construction equipment which operate primarily on power sources other than ones supplying electrical power, although the present invention does require a source of electrical power for its operation. Other examples of electrically powered rental devices comprises rented desk top computers, rented appliances and various rented office equipment (such as copies, facsimile machines and electronic communication devices).

The electronic controller switch 90 is preferably attached to, or incorporated within, the body of the device 102 in a manner to limit access to the switch 90 by the user, thereby increasing security by preventing the user from tampering with the switch 90.

Since the device 102 will be described as an electronic entertainment device for purposes of illustration, the power source 104 comprises a source of electrical power, such as a home outlet or battery. It will be further apparent, however, to those skilled in the art, that the power source 104 may comprise any source of power required by the device 102. Accordingly, the source of power may be gasoline for construction equipment, pneumatic for manufacturing equipment, etc.

Similarly, in the presently preferred embodiment of the invention, the switch 100 comprises a conventional electronic switch responsive to a control signal (described herein as the enable signal) for closing the circuit between the power source 104 and the device 102. Particularly preferred are conventional transistor switches known in the art. However, the switch 100 may comprise any switch compatible with source 104 and device 102. As examples, switch 100 may comprise a pneumatic switch if the source of power is pneumatic power or a valve if the source of power is gasoline. Other configurations for switch 100, device 102, and power source 104 will readily become apparent to those skilled in the art.

It will be further apparent that several sources of power may be present which can be interrupted to prevent use of the device 102. As an example, gasoline-powered construction equipment typically has an electrical system whereby interruption of electrical power to that system will prevent the equipment from operating. The switch 100 of the present invention may be coupled to this electrical system whereby the switch would be an electrical switch. Alternatively, the switch 100 may be coupled to interrupt the flow of gasoline to the engine whereby the switch would be a solenoid valve.

Returning to Figure 1, the switch 100 receives the enable signal from a microprocessor 106 by way of a system interface 108. The microprocessor 106 may comprise any conventional data processing circuitry for performing a plurality of data control and data processing functions. In the presently preferred embodiment of the invention, the data processing circuitry comprises a conventional microprocessor such as an 8052 Intel microprocessor. However, other microprocessing devices or data processing configurations may be readily substituted for the microprocessor 106.

The microprocessor 106 is coupled to provide the enable signal to the switch 100 through the system interface 108. The system interface 108 comprises conventional devices for interfacing the microprocessor 106 with the remainder of the components of the electronic controller switch 90, such as various latches, timers, buffers, amplifiers, multiplexers, input/output devices, etc. The system interface 108 may be readily constructed by those skilled in the art.

The microprocessor 106 is also adapted to receive an access signal from a user interface 110 via the system interface 108. The user interface 110 may comprise any conventional device, or plurality of conventional devices, for interfacing a user with the electronic controller switch described herein. As an example, the user interface 110 may comprise a keyboard including a plurality of switches for transferring a user's selection of any combination of switches (referred to herein as the "input code") into the access signal to be provided to the microprocessor 106. The user interface 100 may also comprise other conventional devices, such as a ten key pad, for translating the user's input code to the access signal which interfaces the user with the microprocessor 106.

In addition to the user interface 110, the microprocessor 106 may also be adapted to receive input from the user via an infrared receiver 130. The infrared receiver 130 may comprise any conventional device for receiving electromagnetic radiation. Although the infrared receiver 130 is described herein by reference to a device for receiving electromagnetic radiation in the infrared range, it will be appreciated by those skilled in the art that the receiver may be adapted to receive electromagnetic radiation of almost any type. However, in the presently preferred embodiment of the invention the receiver 130 is adapted to receive electromagnetic radiation int he infrared range.

The receiver 130 includes an antenna 132 adapted to receive the infrared radiation from a standard infrared transmitter 134. As is known in the art, the transmitter 134 provides an electromagnetic signal output that is modulated to include information indicating which key of the transmitter was pressed. The receiver 130 demodulates the signal received from the transmitter 134 to provide the input signal to the access signal.

The microprocessor 106 is responsive to the access signal received from the user interface 110 or the receiver 130 to search a memory 112. The memory 112 may comprise conventional read-only memory (ROM) for storing program daa usable by the microprocessor 106, as is known in the art. The memory 112 may further comprise random-access memory (RAM) for storing control and other data, as is also known in the art. Still further, the memory 112 may comprise conventional memory controllers, buffers, latches, etc., for allowing the memory 112 to operate in conjunction withe microprocessor 106 and the system interface 108.

In one embodiment of the invention, the control data stored by memory 112 comprises a plurality of data strings wherein each data string includes an access code. Other parameters may be stored in the data strings, as will be described below. The microprocessor 106 is responsive to the access signal received from the user interface 110 or the receiver 130 to determine whether any of the access codes stored in the memory 112 correspond thereto. If an access code stored in the memory 112 does correspond to the access signal, then the data string which includes the corresponding access code is considered a corresponding data string. Accordingly, the user, by entering an access signal which has a corresponding data string stored in memory 112, has indicated that he has a valid input code and is therefore authorized to use the device 102.

However, in the presently preferred embodiment of the invention, each data string also includes a validation data bit. After identifying a corresponding data string, the microprocessor 106 will also determine whether the validation data bit of the corresponding data string is set. If the validation data bit is not set, then the data string is considered an authorizing data string and the microprocessor 106 will provide the enable signal such that power will be supplied to the device 102 from the power source 104. If, however, the validation data bit is set, then the access code which the user provided has been previously used, and, accordingly, the data string is not an authorizing data string and no power will be supplied to the device 102. This means the user will not be allowed use of the device 102. In this manner, the validation data bit is used to indicate that a particular input code, which corresponds to a stored access code, is unused and, therefore, authorized. Once used, the user cannot re-enter the same input code on subsequent occasions to cause power to be supplied to the device since the corresponding data string will have the validation data bit set, thus rendering that particular input code useless.

It will be apparent, however, to those skilled in the art that other methods of indicating authorization of access codes stored in memory 112 can be used. As an example, after use of an access code, it could be deleted from the memory 112, thereby preventing it from authorizing use of the device 102 in the future. Other means of identifying authorizing access codes stored in the memory 112 will be discussed below.

It will also be apparent to those skilled in the art that the method described herein of authorizing use of the device 102 does not require the rental owner to visit the user's premises with a card key or other type of key so that more rental time can be purchased, nor is the user required to return the rented device 102 to the rental owner's premises or even visit the premises. Instead, the memory 112 may be programmed with a multitude of data strings and the user may be provided with a single authorizing input code by the rental owner either over the telephone or by mail. Upon expiration of the authorized time interval, the user simply needs to phone or write the rental owner to receive a new input code and pay the required amount for the next rental time interval desired.

To ensure that the user will not be allowed unauthorized use of the device 102 after expiration of the rental period, each data string stored in the memory 112 also includes a user time data value. The microprocessor 106 is responsive to the access signal received from the user interface 110 or the receiver 130 to determine whether an authorizing data string is stored in the memory 112, as discussed above. If an authorizing data string is stored in the memory 112 (i.e., a corresponding data string with its validation data bit not set), then the microprocessor 106 will retrieve the use time data value of that authorizing data string. The microprocessor 106 will respond to the use time value to provide a time signal to a latch 114, the latch being coupled to a timer 116.

The latch 114 may comprise a conventional device for temporary storage of a limited amount of data. In the presently preferred embodiment of the invention, the latch 114 comprises apparatus for storing at least first and second time signals from the microprocessor 106. The timer 116 may comprise a conventional timing device for measuring a predetermined time interval. In the presently preferred embodiment of the invention, the timer 116 is constructed to measure time intervals for as little as a fraction of an hour and as large as several years.

In operation, the microprocesor 106 provides the time signal to the latch 114, which time signal indicates the time signal may be simply the user time data value or may be derived from the use time data value by the microprocessor 106. The timer 106 will measure the time interval indicated by the time signal stored in the latch 114 and provide an indication when the time interval has elapsed. In the presently preferred embodiment of the invention, the timer 116 is constructed to indicate elapse of the time interval by providing an interrupt signal to the microprocessor 106. The microprocessor 106 is responsive to the interrupt signal from the timer 116 to remove the enable signal from the switch 100, thus discontinuing the supply of power to the device 102 from the power source 104 and terminating use of the device 102. Accordingly, the rental owner is assured that the power will be interrupted to the device 102 upon elapse of the rental time period.

Further, the rental owner may desire to store varying use time data values in the plurality of data strings stored in the memory 112 which correspond to varying time intervals. In this manner, the rental owner can authorize a predetermined rental period from the many different length time periods available, depending on the time period paid for by the user simply by providing an access code to the user which corresponds to a data string stored in the memory 112 having a use time data value corresponding to the desired use time. The rental owner may with to store use time data values which correspond to one or more days, months or years of time. In such manner, the device 102 may be intially rented on a rental period of one duration and then subsequently be rented for additional rental periods of varying duration, according to the amount of rental time purchased by the user, without first modifying or replacing the electronic controller switch 90. This provides the flexibility to rent for successive time periods on as needed basis which is particularly useful with construction equipment when the exact amount of extra rental time needed is difficult to predict.

Further, as will be described below, the use time data value can be used to indicate either continuous possession time or use time measured by actual use. The rental owner may also use the time data value to invalidate access codes to prevent subsequent use simply by restoring a zero value as the time data value after the corresponding input code is once input by the user. In this manner, the validation data bit, discussed above, becomes unnecessary.

Although the present invention has been described herein by reference to a particular configuration and method for the microprocessor 106, latch 114, and timer 116, other variations of this arrangement will become apparent to those skilled in the art. As an example, the timer 116 may comprise a clock. The microprocessor 106 may be adapted to store the time signal in the latch 114 along with a start time from the timer clock 116, wherein the start time incidates the time the rental period began. The microprocessor may be further adapted to periodically monitor the timer clock 116, subtract the start time from the time indicated on the timer clock 116, and compare the difference to the time signal stored in the latch 114. In such a system, the microprocessor 106 will interrupt power to the device 102 via the switch 100 when the difference between the time indicated by the timer clock 116 and the start time of the rental time period equals or exceeds the time signal stored in the latch 114. Other variations of the method and construction of apparatus for measuring time intervals described herein will become apparent to those skilled in the art.

In the presently preferred embodiment of the invention, the latch 114 is adapted to store at least two time signals, referred to herein as "initial" and "additional" time signals, respectively, from microprocessor 106. The latch 114 is adapted to provide the additional time signal to the timer 116 upon expiration of the time interval being measured in response to the initial time signal.

In operation, the user may purchase additional rental time anytime during the initial rental period. After so doing, the user is provided by the rental owner with another input code which corresponds to the additional rental time purchased and the user provides that input code to the user interface 110 or the receiver 130. Assuming that input code corresponds to an authorizing data string as discussed above, the additional time signal will be stored in the latch 114. In this manner, the timer 116 may begin immediate measurement of the time interval corresponding to the additional time signal after the time interval corresponding to the initial time signal, without interruption of power supplied to the device 102. Accordingly, a user may purchase an additional rental time prior to expiration of the prior rental period, thereby ensuring uninterrupted use of the device 102 and do so without cutting the already paid for prior rental period short.

So as not to use up the rental period when the power to the device 102 supplied by the power source 104 has been cut off because of power outages, etc., the microprocessor 106 is also constructed to receive a power signal from a sensor 118 via the system interface 108. The sensor 118 may comprise any conventional device, or combination of devices, for sensing when power is supplied to the device 102 from the switch 100. Since, in the presently preferred embodiment of the invention, the power source 104 comprises an electrical power source, the sensor 118 is adapted to sense when electrical power is supplied to the device 102. The microprocessor 106 is responsive to the power signal from the sensor 118 to interrupt measurement of the time interval by determining and storing the amount of time remaining to be measured by the timer 116. When the power signal indicates that power is again being supplied to the device 102, the microprocessor 106 will restore the remaining time interval as a new time signal in the latch 114 such that the remaining time interval will be measured by the timer 116. In such manner, the rental period is not cut short by losses of power.

In an alternative embodiment of the invention, the switch 100 also includes a manually operated power switch selectively operated by the user and the sensor 118 is adapted to determine when power is interrupted from the device 102 for reasons other than absence of the enable signal. Accordingly, the sensor 118 is used to sense when power is not being supplied due to the user switch in addition to lack of input power. In this embodiment, the electronic controller switch 90 of Figure 1 will be adapted to measure the actual use time of the device 102 instead of a continuous possession time rental period. For added flexibility, the use time data value may include a bit which instructs the microprocessor 106 whether possession of use time rental periods are to be measured. Such a system, for measuring interrupted use times, may be desirable for rentals of electronic entertainment devices, such as televisions, VCRs, or other devices, in motels, hotels, or other similar environments, or for construction equipment which is often rented based on operation time.

The microprocessor 106 is further coupled to a plurality of peripheral circuits 120, which are typically necessary for operation of the microprocessor. As an example, the peripheral circuits 120 may comprise a microprocessor clock, latches, etc. In the presently preferred embodiment of the invention, peripheral circuits 120 include a battery for storing electrical energy usable by the electronic controller switch during periods of power shortage or when the switch 100 is disconnected from the power source 104, such as during transport. Although not illustrated in the figures, the battery included in the peripheral circuits 120 would further be coupled to the memory 112 as well as other devices of the electronic controller switch 90 of Figure 1. The battery of the peripheral circuits 120 may also be rechargeable and include means for recharging the same when power from the power source 104 is returned.

The microprocessor 106 is coupled to a plurality of indicators 122 which are adapted for providing status information to the user. In the presently preferred embodiment of the invention, the indicators 122 comprise three light-emitting diodes (LEDs) wherein each diode is indicative of the status of an operational parameter. The three LEDs indicate whether a valid input code has been supplied to the microprocessor by the user, whether an invalid input code has been supplied by the user, and whether power is being supplied to the device 102 by the switch 100. It will be apparent to those skilled in the art that a wide variety of methods and apparatus may be readily substituted for the indicators 122 to provide status information to the user.

The microprocessor 106 can also be selectively coupled to a display medium 124 which is adapted to display status information concerning the electronic controller switch 90 to the rental owner. In the presently preferred embodiment of the invention, the display medium 124 and the system interface 108 each include connector apparatus to that they may be selectively coupled together by the rental owner when he desires to check the status for reprogramming the microprocessor 106. The display medium 124 may comprise a cathode-ray tube (CRT), a printer, or other means for displaying status information of the electronic controller switch. The microprocessor 106 is responsive to control signals provided by the display medium 124 via the user interface 110, to provide selected status information to the display medium 124.

In the presently preferred embodiment of the invention, the display medium 124 may be coupled to the system interface 108 by the rental owner to allow reprogramming of the memory 112. Accordingly, the rental owner will provide control information to the microprocessor 106 which instructs the microprocessor 106 to restore data strings in the memory 112, as desired by the rental owner. Alternatively, the rental owner may provide control signals which instruct the microprocessor to display remaining unused access codes, verification data bits, and use time data intervals on the display medium 124.

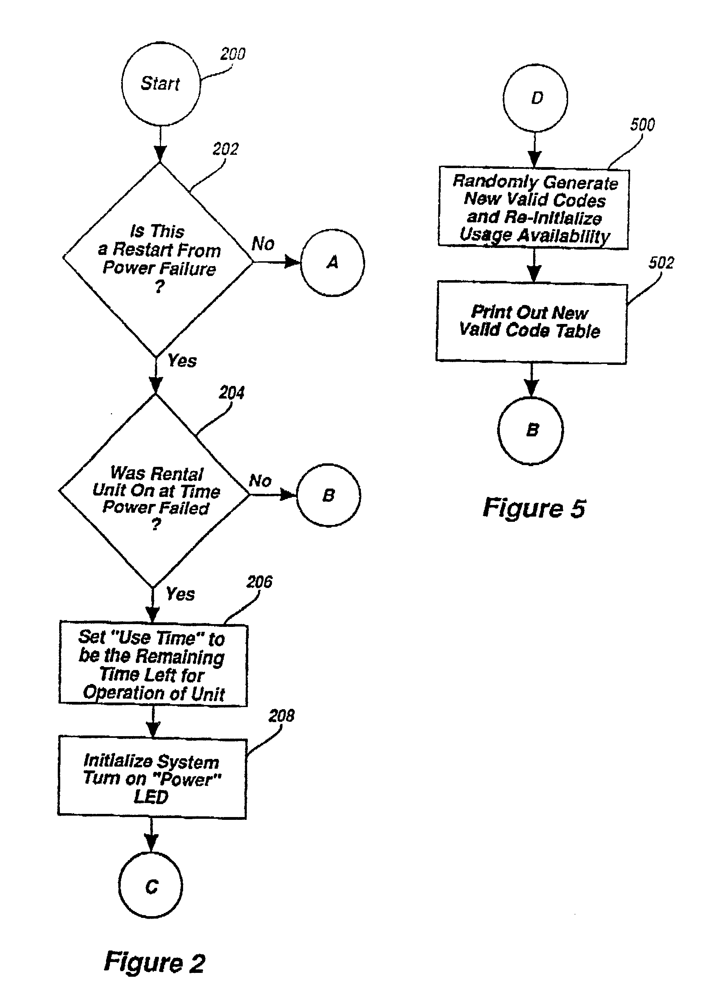

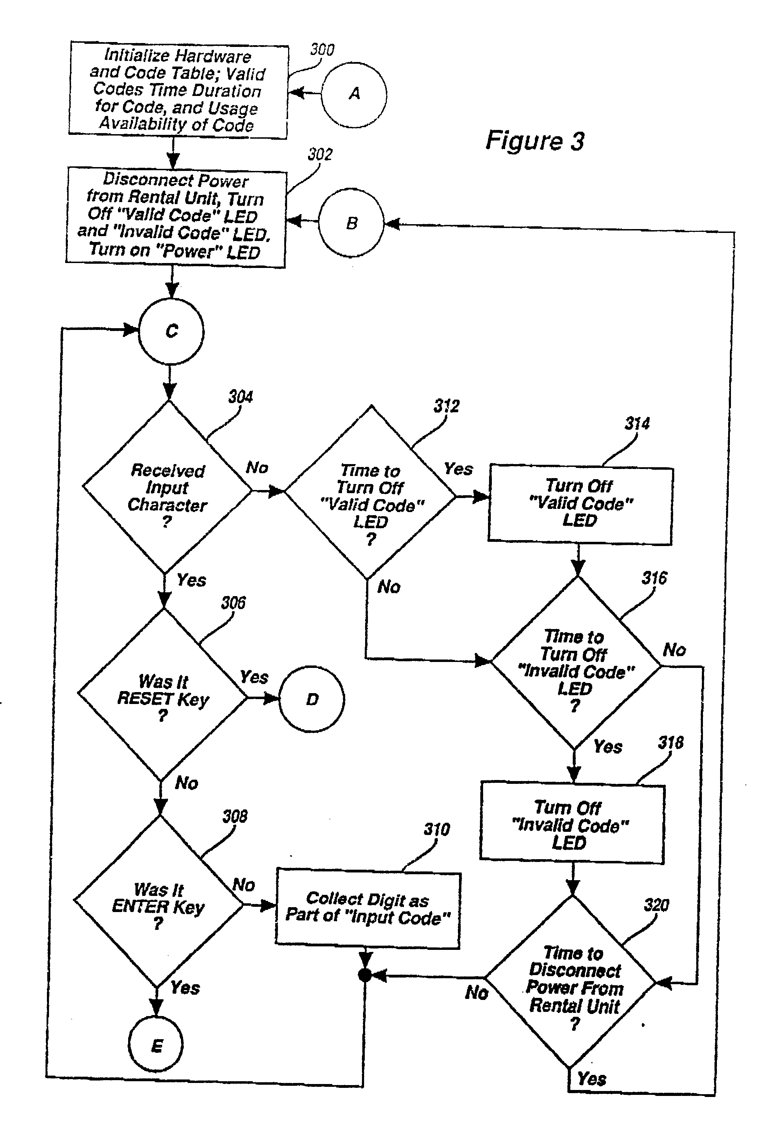

With reference to Figures 2 through 5, a more detailed description of the logic sequence of the electronic controller switch 90 will be provided. Figure 2 indicates start of the program executed by the microprocessor 106, step 200. The starting step 200 indicates a restart to the microprocessor, which may be supplied either by the rental owner or by a power failure, as described above. If the restart is provided by the rental owner, i.e., not from a power failure, step 202, then the microprocessor will initialize its hardware and code table and input valid access codes and use time data values per the rental owner's instructions, as described above, step 300 (see Figure 3). Such a restart would be provided by the rental owner upon connection of the display medium 124.

If the restart is from a power failure, step 202, then the microprocessor 106 will determine whether the device was enabled (i.e., whether the enable signal was valid) at the time of the power failure, step 204. If the rental unit was not on, step 204, the microprocessor will disconnect power from the rental unit, step 302 (see Figure 3), and will turn off the LED indicators 122. As discussed above, such a procedure would be used where the user has purchased use time instead of a continuous possession time rental period.

Returning to Figure 2, if the device 102 was on at the timer power failed, step 204, then the microprocessor 106 will set the use time to be the remaining time left for operation of the unit, step 206, by reprogramming latch 114, as discussed above. The microprocessor will initialize the system and turn on the LED indicator 122, which indicates power is being supplied to the system, step 208.

The microprocessor 106 then continuously performs the instructions and steps illustrated in Figures 3 through 5 to ensure that power is being provided to the device 102 only when authorized. The microprocessor determines whether any input is being provided to the user interface 110 or the receiver 130, step 304. If input is being provided by the user, step 304, the microprocessor will collect the input characters, as determined by which switch of the user interface is depressed when the user interface is a keyboard or key pad, to provide an access signal, steps 306-310.

In the presently preferred embodiment of the invention, the display medium 124 includes a reset key which is used by the rental owner to indicate to the microprocessor 106 that the memory 112 is to be reprogrammed. If the reset key has been pressed, step 306, then the microprocessor 106 will reprogram the memory 112, as will be described hereinbelow by reference to the flow diagram of Figure 5.

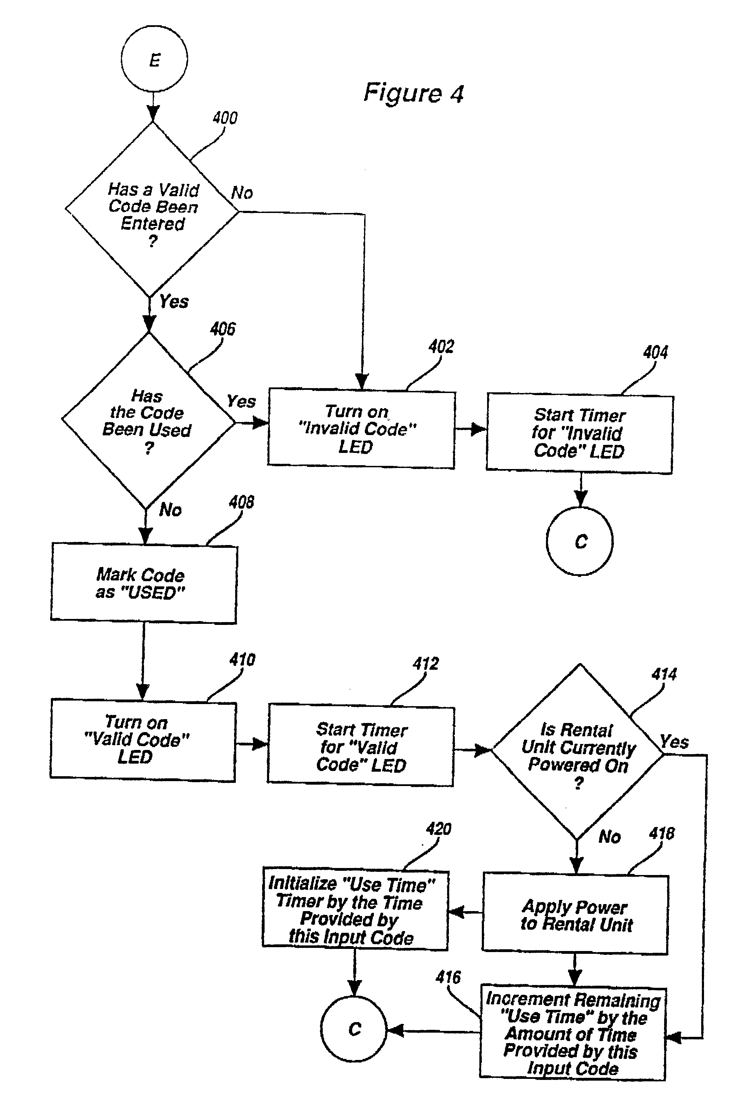

Further, in the presently preferred embodiment of the invention, the user interface 110 and the transmitter 134 include an enter key 128 which is used by the user to indicate that each character of the input code has been provided. In the input character which was received, step 304, was not the enter key, step 308, then the microprocessor 106 will continue to collect characters as part of the input code, step 310, and return to step 304 (see Figure 3). If the received character was the enter key, step 308, then the microprocessor 106 will determine whether the enter code is a valid enter code, as will be described hereinbelow by reference to the flow diagram of Figure 4.

Although the receipt and collection of input codes and access signals has been described and illustrated in Figure 3 as being performed by the microprocessor 106, it will be apparent to those skilled in the art that the user interface 110 and the receiver 130 may comprise sufficient data processing devices to collect each character of the input code and provide an access signal to the microprocessor 106 which includes every character of the input code. Further, it will be apparent to those skilled in the art that the user interface 110 and/or the system interface 108 may include apparatus for performing any translation which is necessarily performed on the input code to provide the access signal.

As mentioned above, the enter key 128 indicates that the user has provided an input code and the microprocessor 106 responds to the enter key to determine whether the user provided [an] input code [that] is a valid code. To determine whether a received input code is valid, the microprocessor first determines whether the access signal provided by the user interface 110 or the receiver 130 in response to the input code, as described above, corresponds to an access code stored in the memory 112 as part of any of the plurality of data strings to thereby determine whether the input code provided by the user is a valid code, step 400 (see Figure 4). If the input code is not a valid code, then the microprocessor 106 will turn on the invalid code LED of the indicators 122, step 402.

In the presently preferred embodiment of the invention, the valid code LED of the indicators 122 will be illuminated by the microprocessor 106 for only a predetermined time period after entry of the input code by the user. As an example, the valid code LED may be illuminated for only ten seconds after entry of the input code. The microprocessor 106 determines whether it is time to turn off the valid code LED, step 312, and if so, turns off the valid code LED, step 314 (see Figure 3).

After the valid code LED of the indicators 122 is illuminated, step 402, the microprocessor 106 will start a timer to measure the predetermined time period for which the invalid code LED will be illuminated, step 303 (see Figure 4). The timer which the microprocessor uses to measure the predetermined illumination period of the invalid code LED may be a portion of the peripheral circuits 120, described above. Alternatively, the timer may be a programmed timer which relies on execution of a predetermined number of steps or interface between the microprocessor 106 and a clock of the peripheral circuits 120 to measure a predetermined time period.

If a valid input code has been entered by the user, step 400, then the microprocessor 106 will determine whether the access code has been used previously, step 406. As discussed hereinabove, in the presently preferred embodiment of the invention, the microprocessor determines whether an access code has been used by monitoring the validation data bit stored in the data string that includes the access code which corresponds to the received access signal, i.e., corresponding to the input code provided by the user. If the validation data bit is set, then the access code has been used, step 406, and the microprocessor will illuminate the invalid code LED of the indicators 122, step 402. If the access code has not been used, then the microprocessor will mark the code as used, step 408, by setting the validation data bit of the data string stored in the memory 112. The microprocessor will then turn on the valid code LED, step 410, and start the timer for the valid code LED, step 412. The predetermined time period for illumination of the valid code LED may be measured in the same manner as the predetermined time period for illumination of the invalid code LED.

After receipt of a valid input code, the microprocessor 106 will determine whether the device 102 is currently powered, step 414, and if so, will increment the remaining use time by the amount of time provided by this input code by storing the appropriate time signal in the latch 114, as described hereinabove, step 416. If the device 102 was not currently on when the valid input code was received, step 414, then the microprocessor 106 will provide the enable signal, thereby applying power to the device 102, step 418, and initialize the timer 116 by the time corresponding to the received input code by storing the appropriate time signal in the latch 114, as described hereinabove. Thereafter, the microprocessor will return to the plurality of steps described above by reference to Figure 3.

In addition to continuously monitoring the system interface 108 for receipt of an input character from either the user or the rental owner, the microprocessor 106 performs other functions, as illustrated in the flow diagram of Figure 3. In similar manner, the microprocessor 106 determines whether it is time to turn off the invalid code LED, step 316, and if so, turns off the invalid code LED, step 318.

Further, the microprocessor 106 determines whether it has received an interrupt from the timer 116, thereby indicating that it is time to disconnect power from the device 102 by removing the enable signal, step 320, and if so, removes power from the device and turns off the power LED, step 302. At this point in its operation, the device 102 can be turn on only if another valid input code is input by the user, steps 304-310.

As mentioned above, the electronic controller switch 90 of the present invention is coupleable to the display medium 124 so that the rental owner can reprogram the memory 112. After the microprocessor 106 has received a signal from the reset key 126, as described above, step 306, the microprocessor 106 will randomly generate new valid input codes (i.e., store access codes) and reinitialize usage availability, step 500. In the presently preferred embodiment of the invention, the microprocessor 106 is adapted to randomly generate a plurality of access codes to be stored in the memory 112. Further, the access codes will be assigned to a data string which includes other data values, e.g., use time data values, that have been stored by the rental owner. The microprocessor will reinitialize usage availability by resetting each of the validation data bits of each of the plurality of stored data strings. In this manner, the rental owner need not re-input the numerous access codes which are stored in the memory 112, thereby saving the rental owner time and expense. However, other methods for providing the plurality of access codes to the memory 112 will readily become apparent to those skilled in the art.

After the microprocessor 106 has generated the new access codes and reinitialized their usage availability, it will print out the corresponding new valid input code table via the display medium 124 so that the rental owner may provide input codes to the user, thereby to allow the user to obtain usage of the device 102, step 502 (see Figure 5). Further, printing out of the data strings informs the rental owner of which use time data value is assigned to each access code.

Since the access code table is generated randomly by each device, the access code table for each electronic controller switch 90 of device 102 is different, i.e., substantially unique, thereby preventing the access codes from one device 102 to be used for unauthorized access of a different device 102. Other methods for providing a plurality of distinct access code tables to prevent unauthorized access may be used, however, the method described above is most efficient and, accordingly, preferred.

In a presently envisioned embodiment of the invention when used with construction equipment, manufacturing equipment, office equipment or other devices which cannot be automatically turned off by the switch 100 immediately upon expiration of the rental period because of the loss of information or danger that would result, the data string will also include information to this effect. The microprocessor 106 will therefore maintain the enable signal after expiration of the rental period until the power signal indicates the user has turned off the device. The microprocessor will control the latch 114 and timer 116 to measure the additional time of use so that this can either be subtracted from the next rental period or accumulated and billed later by the rental owner.

In the presently preferred embodiment of the invention, the input code, access signal, and access code are all corresponding digital data values. However, translations may be provided by the user interface 110, receiver 130 and microprocessor 106, as described above. Similarly, the use time data value and the time signal are corresponding digital data values.

While several presently preferred embodiments of the invention have been described herein, many variations and modifications thereof will readily become apparent to those skilled in the art. It is the intent of the inventors to embody all such modifications and variations in the claims which follow.

**Claims**

1. A timed controller operable with a device powered by a power source to selectively control the application of power to the device in response to an input signal provided by a user, comprising:
electronic switch means responsive to an enable signal for connecting the power source to the controlled device;
memory means for storing a plurality of data strings wherein each data string includes an access code and a validation data bit which may be set to indicate prior usage of said access code of said data string;
user interface means for interfacing the user with the timed controller, said user interface means providing an access signal in response to the input signal from the user; and
data processing means for selectively providing said enable signal in response to said access signal, said data processing means being adapted to respond to the access signal to determine whether any of said access codes of said plurality of data strings stored in said memory means correspond to said access signal and, if so, identifying the one of said data strings which includes the corresponding access code as a corresponding data string, said data processing means being further adapted to determine whether or not said validation data bit of said corresponding data string is set, if not set, said data processing means identifying said corresponding data string as an authorizing data string, setting said validation data bit of said authorizing data string to indicate usage, and providing said enable signal to said electronic switch means to apply power to the controlled device from the power source, and, if previously set to indicate prior usage of said access code said data processing means identifying said corresponding data string as an unauthorized data string and not providing said enable signal.

2. The controller as recited in claim 1, further including timing means responsive to a time signal for measuring time intervals, said data processing means being further adapted to provide said time signal to said timing means so that said timing means measures a time interval corresponding to said time signal, said data processing means being responsive to said timing means to terminate said enable signal after elapse of the measured time interval.

3. The controller as recited in claim 2 wherein at least one of said data strings stored in said memory means includes a first use time data value and at least one of said data strings stored in said memory means includes a second use time data value, and wherein said data processing means further includes means for providing a first time signal in response to said first use time data value and a second time signal in response to said second use time data value, with said time interval measured in response to said first time signal and said time interval measured in response to said second time signal being of different duration.

4. The controller as recited in claim 3 wherein said data processing means further includes means for storing an additional time signal while said timing means measures an initial time interval corresponding to an initial time signal, and wherein said data processing means is further responsive to said timing means to supply said additional time signal to said timing means upon elapse of said initial time interval so that said timing means will immediately measure an additional time interval corresponding to said additional time signal upon elapse of said initial time interval.

5. The controller as recited in claim 2, further comprising means for interruping measurement of said time interval at times when the power to the controlled device is interrupted, said interrupting means being adapted to resume measurement of said time interval when the power to the controlled device is resumed.

6. The controller as recited in claim 5 wherein at least one of said data strings stored in said memory means includes a first use time data value and at least one of said data strings stored in said memory means includes a second use time data value, and wherein said data processing means further includes means for providing a first time signal in response to said first use time data value and a second time signal in response to said second use time data value, with said time interval measured in response to said first time signal and said time interval measured in response to said second time signal being of different duration.

7. The controller as recited in claim 6 wherein said data processing means further comprises means for storing an additional time signal while said timing means measures an initial time interval corresponding to an initial time signal, and wherein said data processing means is futher responsive to said timing means to supply said additional time signal to said timing means upon elapse of .said initial time interval so that said timing means will immediately measure an additional time interval corresponding to said additional time signal upon elapse of said initial time interval.

8. The controller as recited in claim 2 wherein said data processing means further includes means for storing an additional time signal while said timing means measures an initial time interval corresponding to an initial time signal, and wherein said data processing means is further responsive to said timing means to supply said additional time signal to said timing means upon elapse of said initial time interval so that said timing means will immediately measure an additional time interval corresponding to said additional time signal upon elapse of said initial time interval.

9. The controller as recited in claim 1, further including means for indicating to the user whether said corresponding data string for the input signal provided by the user has its validation data bit not set, thus said data processing means identifying said corresponding data string as an authorizing data string, whereby the input signal is indicated to the user as being valid.

10. The controller as recited in claim 9, further including means for indicating to the user whether said corresponding data string for the input signal provided by the user has its validation data bit set, thus said data processing means identifying said corresponding data string as an unauthorized data string, whereby the input signal is indicated to the user as being invalid.

11. The controller as recited in claim 1 further including program means for selectively allowing said memory means to be programmed with a plurality of data strings such that said plurality of data strings are unique to the controller.

12. The controller as recited in claim 11 wherein said data processing means further includes means for generating a plurality of random access codes, said data processing means being responsive to said program means for generating said plurality of random access codes and storing said plurality of access codes in the plurality of data strings stored in said memory means.

13. The controller as recited in claim 12 wherein said program means further includes means for displaying said data strings which have been stored in said memory means such that said random access codes may be identified and so that their corresponding validation data bits may be examined to determine whether said validation data bits are set.

14. The controller as recited in claim 13 wherein said data processing means further includes means responsive to said program means for resetting said validation data bits of said data strings.

15. A rental device powered by a power source, comprising:
electronic switch means responsive to an enable signal for allowing power from the power source to the rental device;
memory means for storing a plurality of data strings wherein each data string includes an access code and a validation data bit which may be set to indicate prior usage of said access code of said data string;
user interface means for receiving an input signal from a user of the rental unit and for providing an access signal in response to the input signal from the user; and
data processing means for selectively providing said enable signal in response to aid access signal, said data processing means being adapted to respond to the access signal to determine whether any of said access codes of said plurality of data strings stored in said memory means corresponds to said access signal and, if so, identifying the one of said data strings which includes the corresponding access code as a corresponding data string, said data processing means being further adapted to determine whether or not said validation data bit of said corresponding data string is set, if not set, said data processing means identifying said corresponding data string as an authorizing data string, setting said validation data bit of said authorizing data string to indicate usage, and providing said enable signal to said electronic switch means to apply power to the rental device from the power source, and, if previously set to indicate prior usage of said access code said data processing means identifying said corresponding data string as an unauthorized data string and not providing said enable signal.

16. The rental device as recited in claim 15, further including timing means responsive to a time signal for measuring rental time periods, said data processing means being further adapted to provide said time signal to said timing means so that said timing means measures a rental time period corresponding to said time signal, said data processing means being responsive to said timing means to terminate said enable signal after elapse of the measured rental time period.

17. The rental device as recited in claim 16 wherein at least one of said data strings stored in said memory means includes a first use time data value and at least one of said data strings stored in said memory means includes a second use time data value, and wherein said data processing means further includes means for providing a first time signal in response to said first use time data value and a second time signal in repsonse to said second use time data value, with said rental time period measured in response to said first time signal and said rental time period measured in response to said second time signal being of different duration.

18. The rental device as recited in claim 17 wherein said data processing means further includes means for storing an additional time signal while said timing means measures an initial rental time period corresponding to an initial time signal, and wherein said data processing means is further responsive to said timing means to supply said additional time signal to said timing means upon elapse of said initial rental time period so that said timing means will immediately measure an additional rental time period corresponding to said additional time signal upon elapse of said initial rental time period.

19. The rental device as recited in claim 16, further including means for indicating to the user whether said corresponding data string for the input signal provided by the user has its validation data bit not set, thus said data processing means identifying said corresponding data string as an authorizing data string, whereby the input signal is indicated to the user as being valid.

20. The rental device as recited in claim 19, further including means for indicating to the user whether said corresponding data string for the input signal provided by the user has its validation data bit set, thus said data processing means identifying said corresponding data string as an unauthorized data string, whereby the input signal is indicated to the user as being invalid.

21. The rental device as recited in claim 16 further including program means for selectively allowing said memory means to be programmed with a plurality of data strings such that said plurality of data strings are unique to the rental device.

22. The rental device as recited in claim 21 wherein said data processing means further includes means for generating a plurality of random access codes, said data processing means being responsive to said program means for generating said plurality of random access codes and storing said plurality of access codes in the plurality of data strings stored in said memory means so that the plurality of access codes stored in said memory are unique to the rental device.

23. The rental device as recited in claim 22 wherein said program means further includes means for displaying said data strings which have been stored in said memory means such that said random access codes may be identified and so that their corresponding validation data bits may be examined to determine whether said validation data bits are set.

24. The rental device as recited in claim 23 wherein said data processing means further includes means responsive to said program means for resetting said validation data bits of said data strings.

25. The rental device as recited in claim 16 further including a housing, said data processing means, said memory means, said timing means and said switch means being positioned within said housing in a manner to limit access thereto by the user, said user interface means being mounted to said housing such that said user may provide the input code thereto.

26. The rental device as recited in claim 21 further including a housing, said data processing means, said memory means, said timing means and said switch means being positioned within said housing in a manner to limit access thereto by the user, said user interface means being mounted to said housing such that said user may provide the input code thereto.

27. The rental device as recited in claim 26 further including connector means for selectively interfacing said program means to said data processing means, said connector means being mounted to said housing in a manner to be accessible from the exterior thereof, said connector means being electrically coupled to said data processing means, said program means being selectively coupleable to said connector means to thereby electrically couple said program means to said data processing means.

28. The rental device as recited in claim 16 further including a gasoline powered engine and a source of gasoline, said switch means further including a solenoid valve coupled intermediate said engine and said source of gasoline to enable the flow of gasoline to said engine in response to aid enable signal.

29. The rental device as recited in claim 16 further including a gasoline powered engine, said engine being operable from a source of gasoline and an electrical system, said switch means being coupled to enable electricity to said electrical system in response to said enable signal.

30. An apparatus for selectively allowing operation of a device, wherein the device is operable from power received from a power source, said apparatus comprising:
switch means responsive to an enable signal for enabling power to be supplied to the device from the power source;
user interface means for providing an access signal in response to a user input signal;
memory means for storing a plurality of data strings wherein each said data string incudes information indicative of an authorized period of usage; and
data processing means for providing said enable signal to said switch means, said data processing means being adapted to determine whether any received access signal corresponds to a stored data string and, if so, to provide said enable signal for the period of time which corresponds to the period of usage which is authorized.

31. The apparatus as recited in claim 30 wherein said memory means further includes means for storing a plurality of access codes wherein each said access code corresponds to a particular one of said data strings, said data processing means being adapted to determine whether any received access signal corresponds to a stored data string by comparing said received access signal to each of said stored access codes for correspondence and, if any of said stored access codes corresponds to said received access signal, examining the corresponding data string of said corresponding access code to determine the period of usage which is authorized.

32. The apparatus as recited in claim 31 wherein said data processing means further includes means for deleting said corresponding access code such that the authorized period of usage for said corresponding data string can no longer be accessed by the user.

33. The apparatus as recited in claim 31 wherein said memory means further includes means for storing a plurality of validation data bits and wherein each said data string and its corresponding access code corresponds to a validation data bit, said data processing means further including means for setting the validation data bit which corresponds to said corresponding access code to indicate that said corresponding access code has been used and thereby indicate that the authorized period of usage for said corresponding data string can no longer be accessed by the user.

34. The apparatus as recited in claim 31 wherein said data processing means further includes means for providing said enable signal for a substantially constant period of time in response to any of said plurality of data strings which indicate a non-zero period of authorized usage.

35. The apparatus as recited in claim 31 wherein said memory means further includes means for storing a plurality of use time data values and wherein each said use time data value corresponds to one of said plurality of data strings, said data processing means being further adapted to provide said enable signal for a period of time which is determined by the use time data value which corresponds to said corresponding data string.

36. The apparatus as recited in claim 35 further including timing means response to a time signal for measuring time periods, said data processing means being adapted to provide the time signal to said timing means in response to said corresponding use time data value so that said timing means will measure an period of time determined by said corresponding use time data value, said data processing means being further adapted to terminate the enable signal after elapse of the measured time interval.

37. The apparatus as recited in claim 36 wherein said data processing means further comprises means for storing an additional time signal while said timing means is measuring an initial time period in response to an initial time signal and wherein said data processing means is further responsive to said timing means to provide said additional time signal to said timing means after elapse of said initial time period.

38. The apparatus as recited in claim 37 wherein said timing means further includes means for interrupting measurement of a time period at times when the power to the device is interrupted, said timing means being adapted to resume measurement of said interrupted time period when the power to the device is resumed.

39. The apparatus as recited in claim 31 wherein said data processing means further includes random number generating means for generating a plurality of random access codes to be stored in said memory means in a manner to indicate correspondence with respective ones of said plurality of data strings.

40. The apparatus as recited in claim 39 wherein said data processing means further comprises means for interfacing said memory means with a display medium so that the plurality of generated and stored access codes may be displayed to an operator.

41. A system for renting a plurality of devices to allow selective operation thereon, wherein each of the plurality of devices is operable from power received from a power source, said system comprising a plurality of electronic controller means each associated with a respective one of the plurality of devices for allowing selective operation thereof, each said electronic controller means including: switch means responsive to an enable signal for enabling power to be supplied to its respective device from the power source; user interface means for providing an access signal in response to a user input signal; memory means for storing a plurality of data strings wherein each said data string includes a respective access code for comparison with said access signal provided by the user to determine whether the user is authorized, a respective validation data bit which is normally reset to indicate that the access code of its respective data string has not been used and is set to indicate that the access code of its respective data string has been used and a respective use time data value to indicate the period of rental time that is authorized by the access code of its respective data string; and data processing means for providing said enable signal to said switch means, said data processing means being adapted to compare said access signal with said plurality of access codes to determine whether any access code corresponds to said access signal and thereby determine whether the user is authorized and, if so, to sample its respective validation data bit to determine whether said access code has been used and, if not, to provide said enable signal for the period of time which corresponds to the period of rental time that is indicating by its respective use time data value, and wherein said plurality of access codes stored in said memory means of each said electronic controller means being substantially unique to said electronic controller means such that the access signal which will result in providing said enable signal for one said electronic controller means will not result in providing said enable signal for another said controller means.

42. A method for authorizing use of a device that is powered from a power source comprising the steps of:

storing a plurality of data strings in an electronic switch wherein each data string incudes a respective access code for comparison with an access signal provided by the user to determine whether the user is authorized, a respective validation data bit which is normally reset to indicate that the access code of its respective data string has not been used and is set to indicate that the access code of its respective data string has been used and a respective use time data value to indicate the period of rental time that is authorized by the access code of its respective data string;

receiving an access signal from a user; and

comparing each received access signal with the plurality of access codes and, if an access code corresponds to a received access signal, sampling its respective validation data bit to determine whether said corresponding access code has been used and, if said corresponding access code has not been used, enabling power to the device for a period of time indicated by the respective use time data value of said corresponding access code.

43. The method as recited in claim 42, further comprising the steps of:

receiving an additional access signal; and

comparing the additional access signal with the plurality of access codes and, if an access code corresponds to said additional access signal, sampling its respective validation data bit to determine whether said corresponding access code has been used and, if said corresponding access code has not been used determining whether the device is enabled and, if not, enabling the device for a time period determined by the value of the use time data value which corresponds to said corresponding access code and, if so, enabling the device for a time period determined by the value of the use time data value which corresponds to said corresponding access code upon expiration of the time period being measured.

44. The method as recited in claim 42, further comprising the steps of:

monitoring power supplied to the device to determine when power is interrupted therefrom;

interrupting measurement of the time period during any period when power is not being supplied to the device; and

continuing measurement of the time interval after power to the device is resumed.

45. A method for renting a plurality of devices to allow selective operation thereof, wherein each of the plurality of devices is operable from power received from a power source, said method comprising the steps of:

providing a memory unit for each of the devices

storing a plurality of data strings in the memory unit of each device wherein each said data string incudes a respective access code for comparison with said access signal provided by the user to determine whether the user is authorised, a respective validation data bit which is normally reset to indicate that the access code of its respective data string has not been used and is set to indicate that the access code of its respective data string has been used and a respective use time data value to indicate the period of rental time that is authorized by the access code of its respective data string;

receiving an access signal from a user of a device; and

comparing the received access signal to each said access code of the device to determine whether any of the access codes stored in the memory unit of the device corresponds to the received access signal to thereby determine whether the user is authorized to use that device and, if an access code corresponds to said received access signal, sampling its respective validation data bit to determine whether said corresponding access code has been used and, if said corresponding access code has not been used enabling use of the device for a time period determined by the value of the use time data value which corresponds to said corresponding access code, said plurality of stored access codes being substantially unique so that an access signal which will allow operation of a first device will not allow operation of a second device.

46. The controller as recited in claim 1 wherein said user interface means includes receiver means for receiving the input signal to an access signal responsive with a standard remote controller for supplying the input signal to said apparatus.

47. The controller as recited in claim 15 wherein said user interface means includes receiver means for receiving the input signal to an access signal responsive with a standard remote controller for supplying the input signal to said apparatus.

48. The controller as recited in claim 30 wherein said user interface means includes receiver means for receiving the user input signal to an access signal responsive with a standard remote controller for supplying the user input signal to said apparatus.

*Figure 1*

EP 0 371 451 A2

*200*

Start

*202*

Is This a Restart From Power Failure ? — No → A

Yes

*204*

Was Rental Unit On at Time Power Failed ? — No → B

Yes

*206*

Set "Use Time" to be the Remaining Time Left for Operation of Unit

*208*

Initialize System Turn on "Power" LED

C

**Figure 2**

D

*500*

Randomly Generate New Valid Codes and Re-Initialize Usage Availability

*502*

Print Out New Valid Code Table

B

**Figure 5**

Figure 3

Initialize Hardware and Code Table; Valid Codes Time Duration for Code, and Usage Availability of Code — 300

A

Disconnect Power from Rental Unit, Turn Off "Valid Code" LED and "Invalid Code" LED. Turn on "Power" LED — 302

B

C

Received Input Character ? — 304

No → Time to Turn Off "Valid Code" LED ? — 312

Yes → Turn Off "Valid Code" LED — 314

Yes

Was It RESET Key ? — 306

Yes → D

No

No → Time to Turn Off "Invalid Code" LED ? — 316

No

Yes → Turn Off "Invalid Code" LED — 318

Was It ENTER Key ? — 308

No → Collect Digit as Part of "Input Code" — 310

Yes → E

Time to Disconnect Power From Rental Unit ? — 320

No

Yes

## Figure 4